Europäisches Patentamt

**European Patent Office**

**Office européen des brevets**

(11) Publication number: **0 100 376**

**A2**

## (12) EUROPEAN PATENT APPLICATION

(21) Application number: **82110670.5**

(22) Date of filing: **18.11.82**

(51) Int. Cl.³: **B 23 B 27/16**
**B 23 B 27/10**

(30) Priority: **04.08.82 US 405012**

(43) Date of publication of application:
**15.02.84 Bulletin 84 7**

(84) Designated Contracting States:
**BE CH DE FR GB IT LI NL SE**

(71) Applicant: **Rockwell International Corporation**
**2230 East Imperial Highway**
**El Segundo, California 90245(US)**

(72) Inventor: **Cassidenti, Michael Leroy**
**8211 Woodlake Avenue**
**Canoga Park California 91304(US)** -

(74) Representative: **Wächtershäuser, Günter, Dr.**
**Tal 29**
**D-8000 München 2(DE)**

(54) **Metal working tool.**

(57) A metal working tool 10 comprising a seat 12, a bimetallic metal cutting insert 14', and a chipbreaker 16. High strength structural component 66 of insert 14' has at least one metal cutting edge 56 while inner structural component 68 has high thermal conductivity for conducting heat away from cutting region 55. A novel internal fluid system directs a plurality of coolant fluid streams proximate working region 55. Simultaneous use of an electrical through-the-tool hot machining technique and the internal fluid system of the bimetallic tool provides enhanced machinability of a workpiece and decreased tool wear.

Fig.1.

EP 0 100 376 A2

81R40

METAL WORKING TOOL

Michael L. Cassidenti

## Background of the Invention

### 1.  Field of the Invention

This invention relates generally to tools for metal working. More particularly, the invention relates to metal working tools having an improved capability for conducting heat away from the metal working regions thereof.

### 2.  Description of the Prior Art

It is known that the life of metal cutting tools decreases as the operating temperatures to which such tools are exposed is increased. For example, it was reported as early as 1938 by H. Schallbroch, H. Schaumann, and R. Wallichs, Vortrage der Hauptversammlung, 1938 der Deutschen Gessellschaft fur Metallkunde, Vereines deutscher Ingenieure Verlag, 1938,pp. 34-38, that cutting tests made with a workpiece at room temperature and only the cutting speed as a variable demonstrated that tool life varies inversely as approximately the 20th power of the tool-chip interface temperature expressed in degrees centigrade. The increased tool temperature softens and weakens the tool metal so that it is more readily abraded away.

Significant effort has been expended by workers seeking means for reducing or dissipating the heat produced at the tool-chip interface during metal working operations, and many such efforts have been directed to providing a cooling fluid flow from an external source to the tool or workpiece. Since metals possessing high values of thermal conductivity such as copper or silver do not possess the necessary strength to serve as machining tools or cutting inserts, such tools and cutting inserts have typically been made of other metals or alloys having relatively low values of thermal conductivity such as tungsten or carbide. Although suitable for forming a metal cutting edge, such metals and alloys are relatively incapable of rapidly conducting heat therefrom.

Various metal working tools having the strength and hardness necessary to machine high strength metals and alloys such as titanium, Inconels, and other high strength materials are commercially available. One group of such tools, commonly known as carbide tools or carbide cutting inserts, are characterized by having relatively low thermal conductivity (i.e. $Kt_o < 100$).. Exemplary of such cutting inserts is a TPG 432F grade 883 carbide cutting insert manufactured by the Carballoy Systems Division of the General Electric Company which was modified for use in the preferred embodiment of the present invention. Such insert comprises approximately 95% tungsten and 5% cobalt. According to Baumeister & Marks "Standard Handbook for Mechanical Engineers", 7th Ed. McGraw-Hill Book Co. (1967), tungsten possesses a thermal conductivity ($Kt_o$) of 92 Btu per hr. per $ft^2$ per $^o$F per ft and cobalt possesses a $Kt_o = 28$. For comparison purposes, the following metals are identified therein as relatively good thermal conductors(i.e. $Kt_o > 100$):

| Substance | Kto |
|-----------|-----|
| Silver    | 242 |
| Copper    | 232 |
| Gold      | 196 |
| Aluminum  | 130 |

Unfortunately, as mentioned hereinabove, the materials which have relatively high thermal conductivity do not have the necessary strength and hardness to machine high strength metals or alloys.

Objects of the Invention

It is thus an object of the present invention to provide a metal working tool which exhibits better thermal conductivity than has been available in prior art tools.

Another object of the invention is to provide a metal working tool having improved means for directing the flow of coolant fluid to the metal working region/workpiece interface.

Another object of the invention is to provide a bimetallic metal working tool.

A further object of the invention is to provide a metal working tool having an internal fluid cooling system which operates as a heat exchanger to conduct heat away from the metal working region thereof.

Another object of the invention is to provide a tool capable of machining high strength metals and superalloys.

Another object of the invention is to provide metal working tools having longer life than present-day tools.

Still another object of the invention is to provide a tool with superior cutting capabilities thus providing a means to extend the service life of lathes, milling machines and the like.

Another object of the invention is to provide a tool useful in through-the-tool electrical resistance hot machining operations.

Other objects, advantages and novel features of the present invention will become apparant from the following detailed description of the invention when considered in conjunction with the accompanying drawings.

## Brief Summary of the Invention

The present invention is directed to novel metal working tools which exhibit greater thermal conductivity than prior art tools of similar geometry. In accordance with the preferred embodiment, a metal working tool for use in a lathe or the like and comprising a seat, a cutting insert and a chipbreaker is provided with a novel arrangement of internal passages for directing coolant fluid to the metal working edge/workpiece interface. In accordance with one aspect of the preferred embodiment, fluid in an internal fluid passage passes proximate the metal working region of the insert thereby conducting heat therefrom. Further, in accordance with the preferred embodiment, the cutting insert structure comprises an outer structural component having at least one metal working edge and a central cavity for receiving an inner structural component having greater thermal conductivity than the outer structural component. The outer and inner structural components are interconnected to assure good thermal communication therebetween. According to one aspect of the preferred embodiment, electric current is passed between the tool and the workpiece shear zone in order to heat the shear zone thereby improving the machinability of the workpiece. Another embodiment of the invention provides a bimetallic fluted metal working tool having a first metallic structural component defining at least one cutting edge. A second structural component having greater thermal conductivity than the first structural component is bonded to the flute of the tool for efficiently conducting heat from the working region thereof.

Brief Description of the Drawings

Fig. 1 is a schematic perspective representation of a metal working tool and clamp-type holder.

Fig. 2 is an exploded perspective schematic representation of the tool of Fig. 1.

Fig. 2a is a horizontal cross section of a metal working insert depicting fluid passages therewithin.

Fig. 2b is a cross-sectional view, taken along line 2B-2B of the insert of Fig. 2a.

Fig. 2c is a magnified perspective view of a portion of a metal working insert depicting the metal working region thereof.

Fig. 3 is an exploded perspective view of a bimetallic metal working tool depicting the fluid passage therein and the relationship between the outer and inner metallic structural components of the metal working tool insert.

Fig. 4 is a cross-sectional view, taken along line 4-4 of Fig. 3 depicting the internal cavities therein.

Fig. 5 is a perspective schematic representation of the bimetallic tool insert of Fig. 3 depicting the fluid flow paths therein.

Fig. 6 is a side elevation schematic view of the tool of Fig. 1 configured for electrical hot machining.

Fig. 7 depicts a partially cut-away side view of a fluted bimetallic metal working tool in accordance with the invention.

The same elements or parts throughout the figures of the drawings are designated by the same reference numbers, while equivalent elements bear a prime designation..

Description of the Preferred Embodiment

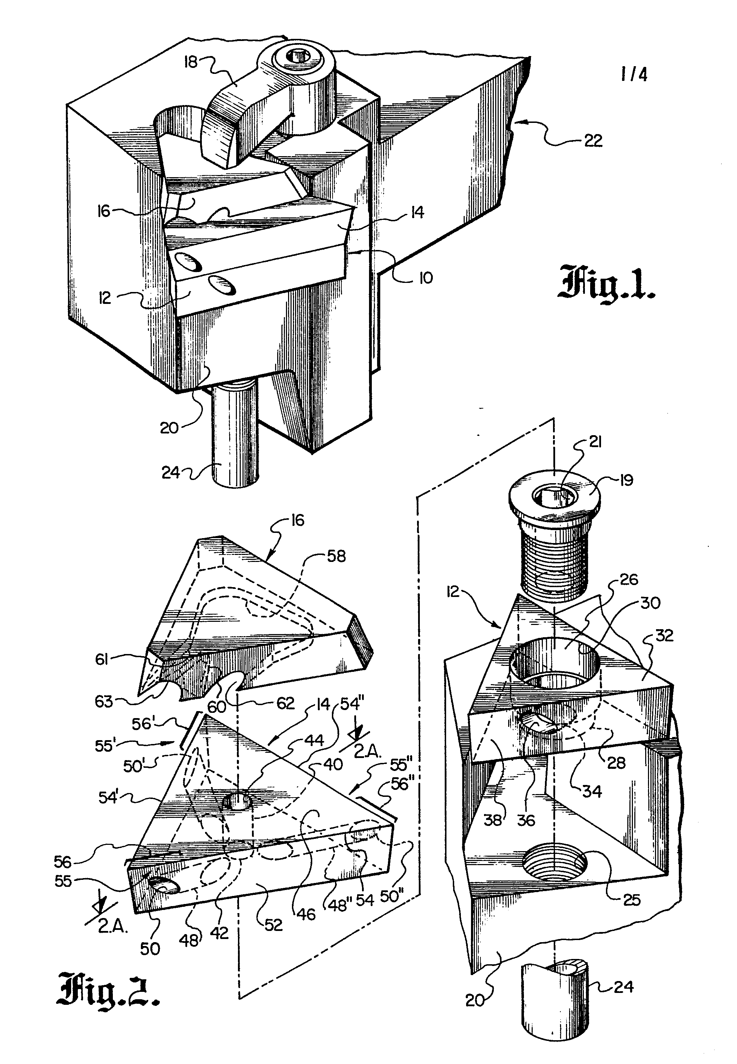

Referring now to Fig. 1, there is depicted a metal working tool generally designated 10 for use in a lathe or the like. Tool 10 comprises three components, designated seat 12, cutting insert 14 and chipbreaker 16. The three components 12,14 and 16 are held together by the upper and lower lips 18,20, respectively, of clamping means 22. Cutting insert 14 may comprise a high strength metal or, in certain applications, other materials, such as ceramic or the like.

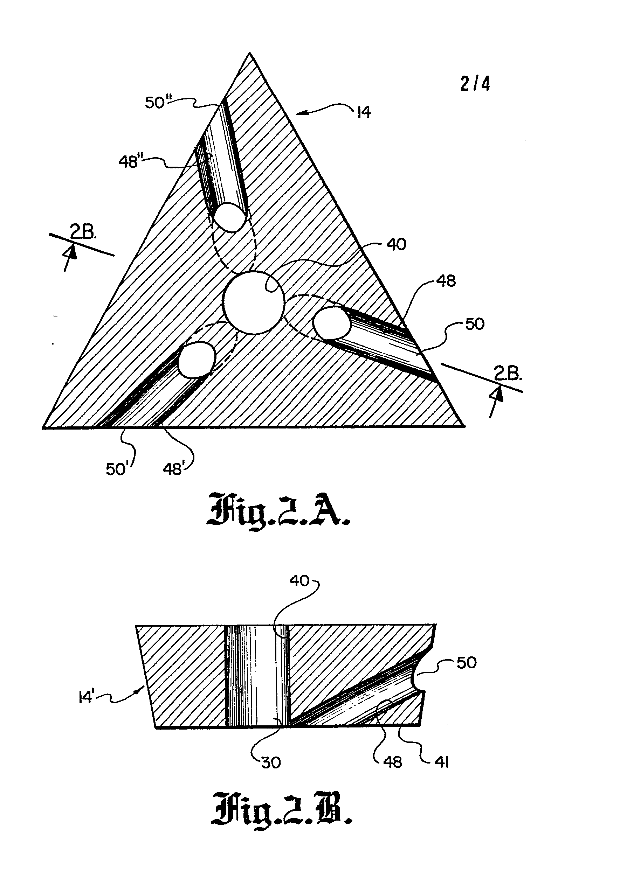

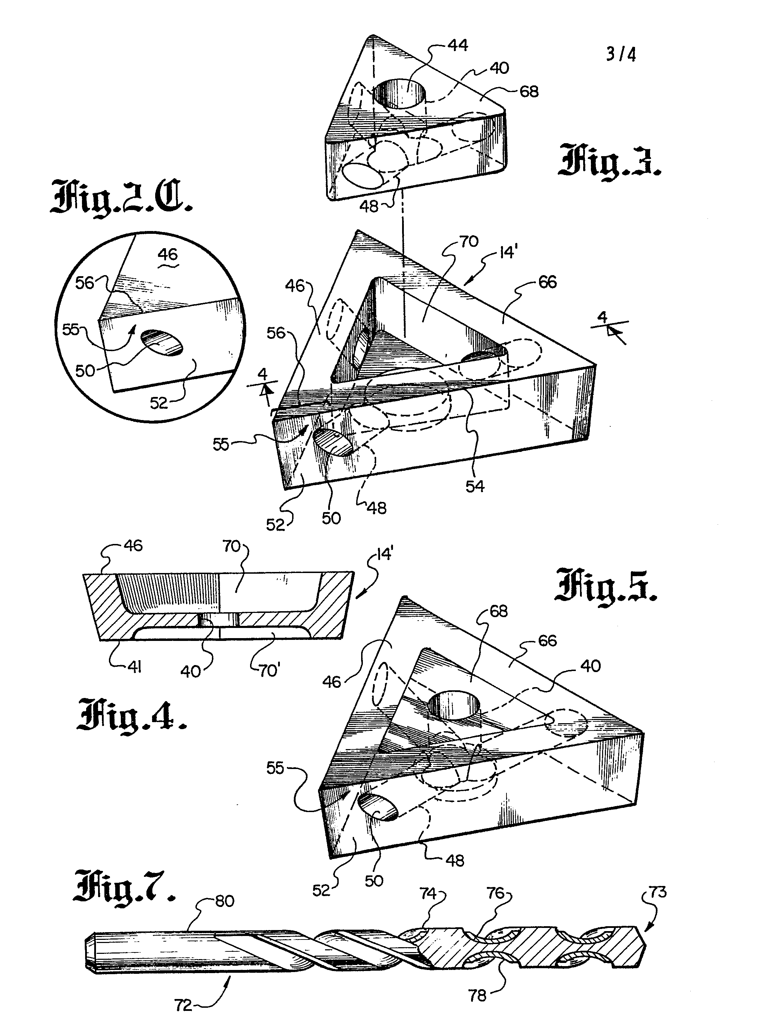

Fig. 2 presents an exploded view of tool 10 depicting each of the components 12,14 and 16 thereof. Fig. 2 also depicts a novel fluid cooling system for tool 10 wherein coolant fluid is supplied to tool 10 via conduit 24 which engages fluid passage 25 passing through lower lip 20.

Seat 12 is a substantially triangular planar structure affixed to lower lip 20 by bolt 19. Although bolt 19 is used in the preferred embodiment, any conventional securing means will suffice. Fluid passage 21 extends through bolt 19 and communicates with both seat fluid supply passage 26 extending from fluid intake port 28 in the lower surface (not visible) of seat 12 and conduit 24. Seat fluid supply passage 26 extends to fluid outlet port 30 in the upper surface 32 of seat 12. Seat fluid passage 26 also communicates with seat fluid discharge passage 34 which supplies coolant fluid to fluid exit port 36 located in the flank 38 of seat 12.

Cutting insert 14 is a substantially triangular planar structure having an insert fluid supply passage 40 extending from fluid intake port 42 located in the lower surface thereof (not visible) to outlet port 44 located in the upper surface 46 thereof. Intake port 42 is generally disposed to receive coolant fluid from fluid outlet port 30. Insert fluid supply passage 40 also communicates with insert fluid discharge passage 48 which supplies coolant fluid to fluid exit port 50 located in the flank 52 of cutting insert 14.

As depicted in Fig. 2, upper surface 46 and flank 52 join to form edge 54. Similarly, upper surface 46 joins flank 52' (not shown) to form edge 54' and upper surface 46 joins flank 52" (not shown) to form edge 54". These edges 54, 54' and 54" are the upper edges of insert 14. A portion of each edge 54, 54' and 54" is a metal working edge, generally designated 56, 56' and 56", respectively. Metal working edges 56, 56' and 56" lie within the respective metal working regions generally designated 55, 55' and 55". Metal working regions 55, 55' and 55" encompass portions of the upper surface 46 and flanks 52, 52' and 52" forming metal working edges 56, 56' and 56". Metal working region 55 is further depicted in Fig. 2c.

Chipbreaker 16 is a substantially triangular planar structure having a chamber 58 centrally disposed therewithin to receive fluid from outlet port 44. Chamber 58 is a depression extending partially through chipbreaker 16 and may be of any convenient geometry. Chipbreaker fluid discharge passages 60,61 communicate with chamber 58 and with exit ports 62,63, respectively. It should be recognized that although two passages 60,61 are shown, one or more of such passages may be used.

During metal working operations, the most intense heat is generated in the metal working region generally denoted 55 around the interface of metal working edge 56 and a workpiece 84 of Fig. 6. To help dissipate this heat the present invention provides a novel arrangement of fluid passages and fluid exit ports to direct coolant fluid streams proximate metal working region 55. As specifically depicted in Fig. 2, pressurized coolant flows from a coolant source (not shown) through conduit 24 and fluid passages 25 and 21 into intake port 28 and seat fluid supply passage 26. A portion of the fluid flowing through seat fluid supply passage 26 is diverted into seat fluid discharge passage 34 and expelled through fluid exit port 36. Seat fluid supply passage 34 and fluid exit port 36 are oriented so that the central axis thereof projects proximate metal working region 55. Thus, fluid ejected from fluid exit port 36 is directed proximate metal working region 55 to conduct heat therefrom.

The balance of coolant fluid passing through seat fluid supply passage 26 passes through outlet port 30 into fluid intake port 42 and insert fluid supply passage 40. A portion of such fluid is diverted into insert fluid passage 48 to be ejected through fluid exit port 50. Insert fluid discharge passage 48 and fluid exit port 50 are also oriented so that a fluid stream expelled from fluid exit port 50 is directed proximate metal working region 55. Insert fluid discharge passage 48 passes beneath upper surface 46 of insert 14 in the vicinity of metal working edge 56. This is, as mentioned hereinabove, the region of highest induced temperature during machining operations. The fluid flowing through insert fluid discharge passage 48 thus acts as a heat exchanger to conduct heat away from metal working region 55.

Fig. 2a is a horizontal cross section of cutting insert 14 showing the orientation of insert fluid discharge passages 48, 48' and 48" and of exit ports 50, 50' and 50". As can be seen, this orientation is such that the fluid stream emanating from exit port 50 will be projected across a portion of flank 52. Fig. 2b is a cross sectional view, broken away, along line 2B-2B of cutting insert 14 further depicting the orientation of insert fluid discharge passage 48. As can be seen, insert fluid discharge passage 48 may communicate with insert fluid supply passage 40 proximate the lower surface 41 of cutting insert 14 and project upwardly through the interior of cutting insert 14 to exit port 50. Thus, fluid passing through insert fluid discharge passage 48 and fluid exit port 50 will be expelled in a stream directed upward and approximately across flank 52 proximate metal working region 55.

As depicted in Fig. 2, a second portion of the fluid flowing through insert fluid discharge passage 40 flows through outlet port 44 into chamber 58 of chipbreaker 16. From chamber 58 coolant fluid is directed via chipbreaker fluid discharge passages 60,61 to exit ports 62,63, respectively. Chipbreaker fluid discharge passages 60,61 and exit ports 62,63 are oriented so that the projected central axes thereof pass proximate working region 55. Thus, a fluid stream is directed along the upper surface 46 of insert 14 to metal working edge 56, providing still another stream of coolant fluid proximate metal working region 55.

Fig. 2 discloses not only metal working edges 56, 56' and 56" but also insert fluid discharge passages 48, 48' and 48" leading to fluid exit ports 50, 50' and 50". In operation, only one such metal working edge is used at a given time, and clamping means 22 is constructed so that the fluid exit ports associated with the unused metal working edges are blocked to prevent fluid flow therethrough. Thus, the discussion hereinabove is equally applicable to any of the metal working regions 55, 55' or 55" and the insert fluid discharge passage and exit port associated therewith.

It should be noted that although the description of the preferred embodiment describes upwardly directed fluid streams directed proximate metal working region 55 from both exit port 36 and exit port 50, the invention would be useful, but less efficient, if only one such stream was present. Thus, another embodiment of the invention could provide a tool comprising only insert 14 and chipbreaker 16. Still another embodiment would have an exit port 36 integral with lower lip 20 thereby eliminating the need for seat 12. Another embodiment may replace chipbreaker 16 with another component, not a chipbreaker, for directing coolant fluid over the upper surface 46 of insert 14 proximate metal working region 55. Still other embodiments could comprise one or more fluid discharge passages leading to one or more associated fluid exit ports in any or all of the tool components. The invention is intended to include all such embodiments.

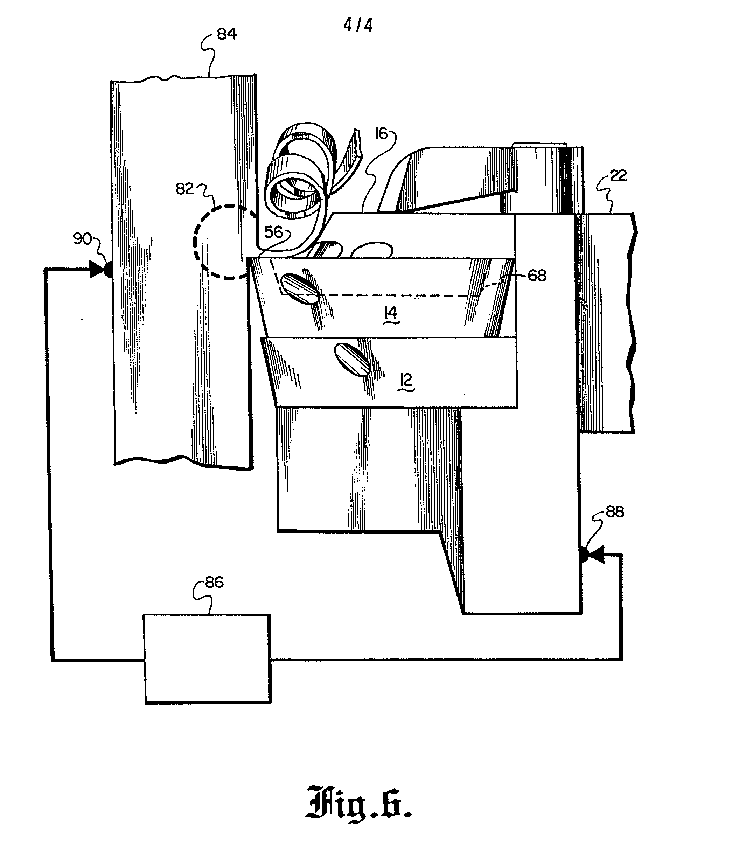

In order to further improve the heat transfer capability of tool 10, a novel bimetallic structure for insert 14 has been invented for use with the aforementioned fluid cooling system. This preferred embodiment, depicted in Fig. 3 comprises a bimetallic substantially planar metal working insert 14' having a peripheral outer structural component 66 encompassing an inner structural component 68. Outer structural component 66 is made from a material such as carbide or tungsten or the like suitable for machining metal. Inner structural component 68 is made from a material having good thermal conductivity such as copper, silver, or the like. Thus, the invention provides a cutting insert 14' having the cutting ability of carbide with enhanced ability to conduct heat from the working region 55 thereof.

In insert 14' of the preferred embodiment, a centrally located cavity 70 of convenient geometry is provided in outer structural component 66. This may be provided by electric discharge machining, casting or other suitable means. Inner structural component 68 is then provided by electroforming copper or other suitable material into cavity 70. Alternatively, two mutually opposed cavities 70,70' may be formed in the lower 41 and upper 46 surfaces of outer structural component 66 as depicted in Fig. 4. Copper or other thermally conductive material may then be electroformed therewithin in a conventional manner. Although electroforming is the preferred means for forming inner structural component 68, other conventional means for attaching inner structural component 68 to outer structural component 66 are also acceptable.

Another embodiment of the invention provides for cavity 70 to extend completely through outer structural component 66. An inner structural component of copper or other highly thermally conductive material 68 may then be brazed or otherwise bonded therewithin to form an integral planar cutting insert 14'.

The novel bimetallic structure of the preferred embodiment provides that the higher thermal conductivity of the inner structural component 68 serves to conduct heat away from the metal working region 55 more readily than was possible with prior art inserts, thereby increasing the life and versatility of the cutting insert 14'. Since the invention provides a more efficient metal working tool, the forces exerted upon a workpiece may be reduced in a given metal working operation, thereby serving to increase the service life of lathes and other machines wherein the invention is utilized.

The bimetallic structure of cutting insert 14' is compatible with the coolant fluid system described hereinbefore and depicted in both Fig. 3 and Fig. 5. In the preferred embodiment wherein inner structural component 68 is electroformed into cavity 70, the electroforming process is completed to provide an integral, bimetallic cutting insert 14' wherein the appropriate fluid passages and ports are then created.

It should be noted that although, in the preferred embodiment, bimetallic cutting insert 14' utilizes the fluid cooling system described hereinabove, the enhanced utility of insert 14' is not limited to such application and bimetallic insert 14' will provide enhanced means for conducting heat away from working region 55 regardless of whether internal fluid cooling is used.

Attention is now directed to Fig. 6 which depicts another aspect of the preferred embodiment. In Fig. 6, tool 10 is utilized for electrical resistance hot machining.

As is well known, metals and alloys tend to deform more easily when heated. One common method of supplying heat to the shear zone of a workpiece is to pass an electrical current therethrough. Such current flow is commonly supplied through the metal working edge of the tool. Since metallic tools as well as workpieces are affected by heating, the aforedescribed electrical resistance hot machining technique causes relatively rapid deterioration of the tools used. Applicant's invention provides the desired enhanced machinability while concurrently retarding the rate of tool wear.

A variable current source 86 capable of supplying high current (AC or DC) on the order of 1000 amperes at approximately 1 volt has first 88 and second 90 electrodes connected, respectively, to clamping means 22 and to workpiece 84. Thus, with metal working edge 56 in contact with metallic workpiece 84, a current loop is established from electrode 88 through clamping means 22, tool 10, and shear zone 82 to electrode 90. The direction of current flow around the loop may have little, if any, effect on the hot machining operation.

As machining of a high strength metallic workpiece 84 comprising titanium or the like proceeds, heat built up in metal working region 55 is effectively dissipated by structural element 68 and by the fluid cooling system as described hereinabove. Heat built up in shear zone 82, however, is not so effectively dissipated since such high strength materials typically are relatively poor heat conductors and since the shear zone thereof is not bathed by fluid. Thus, the temperature of shear zone 82 rises above that of metal working region 55. The machinability of workpiece 84 is thus enhanced without the degree of tool wear experienced in prior-art through-the-tool electrical resistance hot machining techniques.

Fig. 7 depicts another embodiment of the present invention. Therein is shown a bimetallic fluted drill bit generally designated 72 having metal working region 73, lands 74 and flute 76 associated therewith. Since the flute 76 is designed primarily to carry away chips rather than to cut, it may be plated with a relatively soft but highly thermally conductive material such as copper or the like. This provides the tool 72 with an enhanced capability to conduct heat away from the working region 73. Additionally, copper coating 78 may extend the entire length of flute 76 and onto shank 80 for optimal heat dissipating qualities. The original metal working qualities of drill bit 72 are thus retained and the heat dissipating qualities thereof significantly enhanced. The aforedescribed embodiment is not limited to drill bits but is equally applicable to any fluted machining tool such as broaches, taps, milling cutters, reamers and the like.

From the foregoing, it should now be apparent that a novel metal working tool has been disclosed which is able to machine metal at speeds previously unattainable and under conditions which would cause heat induced damage to prior art metal working tools. It should be understood that although reference herein has been made to a preferred embodiment, the teachings of the invention are equally applicable to various other embodiments. For example, although an embodiment disclosed herein has been described as having three cutting edges and an appropriate fluid cooling system therefor, the invention is equally applicable to a tool having one or more cutting edges with appropriate fluid cooling therefor. Additionally, the bimetallic structure of cutting insert 14' may take the form of two structural components having respective substantially flat abutting surfaces or a sandwich configuration with the highly conductive material held between two high-strength planar structures and in thermal communication therewith. Alternatively, the bimetallic structure may comprise a highly conductive body affixed to a metal cutting tip. Further, it should be recognized that the novel fluid cooling system disclosed herein is useful with metallic cutting tools or cutting inserts comprised of virtually any heat conducting material, and is not limited to the bimetallic structure defined herein.

Although particular embodiments of the invention have been described and illustrated herein, it is recognized that modifications and variations may readily occur to those skilled in the art and consequently it is intended that the claims be interpreted to cover such modifications and equivalents.

0100376

The invention shall now be summarized as follows:

1.    A metal working tool comprising:

a first substantially planar structure having at least one metal working region for contacting and machining a workpiece;

means for conveying a first and a second portion of a fluid through said first substantially planar structure and wherein said means directs said first portion of said fluid proximate said metal working region; and

means for directing said second portion of said fluid proximate said metal working region.


2.    The metal working tool of point 1 wherein said metal working region comprises at least one outwardly disposed metal working edge.


3.    The metal working tool of point 1 wherein said first substantially planar structure comprises metallic material.


4.    The metal working tool of point 1 wherein said means for conveying a first and a second portion of a fluid through said first substantially planar structure includes at least one internal fluid passage communicating with a fluid source and with at least one first fluid exit port proximate said metal working region.


5.    The metal working tool of point 4 wherein said first substantially planar structure includes an internal fluid supply passage in fluid communication with said fluid source and an internal fluid discharge passage in fluid communication with said internal fluid supply passage and with said first fluid exit port.

6.    The metal working tool of point 5 wherein the fluid in said internal fluid discharge passage is a heat exchanger means for dissipating heat in said metal working regions.

7.    The metal working tool of point 1 wherein said means for directing said second portion of said fluid proximate said metal working region comprises a second structure having at least one internal fluid passage for receiving said second portion of said fluid and for conveying said second portion of said fluid to at least one fluid exit port in said second structure proximate said metal working region.

8.    The metal working tool of point 7 wherein said second structure further includes a chamber in fluid communication with said fluid supply passage of said first substantially planar structure and at least one fluid discharge passage in fluid communication with said chamber and with at least one fluid exit port in said second structure.

9.    The metal working tool of point 7 wherein said first substantially planar structure comprises a metal cutting insert.

10.    The metal working tool of point 7 wherein said second structure comprises a chipbreaker.

11.    The metal working tool of point 7 further including means for directing a third portion of fluid proximate said metal working region.

12. The metal working tool of point 11 wherein said means for directing a third portion of fluid comprises a third structure having at least one interior fluid passage in fluid communication with a fluid source and with at least one fluid exit port in said third structure.

13. The metal working tool of point 12 wherein said third structure abuts said first substantially planar structure and said interior fluid passage in said third structure is in fluid communication with said fluid supply passage in said first substantially planar structure.

14. The metal working tool of point 1 wherein said first substantially planar structure comprises at least a first substantially planar metallic structural component having at least one metal working edge within said metal working region and a second metallic structural component having greater thermal conductivity than said first structural component and in thermal communication therewith.

15. The metal working tool of point 14 wherein said first planar structural component has at least one substantially flat exterior surface and said second structural component has at least one substantially flat exterior surface abutting and in thermal communication with said substantially flat exterior surface of said first planar structural component.

16. The metal working tool of point 14 wherein said first substantially planar structural component has a cavity therewithin for receiving said second structural component and said second structural component is secured within said cavity and in thermal communication with said first structural component.

17. The metal working tool of point 14 further including means for causing electrical current to flow between said tool and said workpiece.

18. The metal working tool of point 1 wherein said first substantially planar structure is a bimetallic structure comprising a first high strength metallic structural component having at least one metal working region integral with and in thermal communication with a second metallic structural component having greater thermal conductivity than said first component and wherein said first component is interposed between said second component and a workpiece to be machined by said tool.

19. The metal working tool of point 18 further including means for causing electrical current to flow between said tool and said workpiece.

20. A bimetallic tool comprising a first high strength metallic structural component having at least one metal working region integral with and in thermal communication with a second metallic structural component having greater thermal conductivity than said first component and wherein said first component is interposed between said second component and a workpiece to be machined by said tool.

21. The bimetallic tool of points 18 or 20 wherein said first structural component is a planar component.

22. The bimetallic tool of point 21 wherein said first structural component further comprises at least one cavity for receiving said second structural component therewithin and said second structural component is secured therewithin and in thermal communication with said first structural component.

23. The bimetallic tool of point 21 wherein said first structural component has a first substantially flat surface and said second structural component has a second substantially flat surface secured to and in thermal communication with said substantially flat surface of said first structural component.

24. The bimetallic tool of point 20 wherein said tool is a fluted tool.

25. The bimetallic tool of point 24 wherein said tool is a drill.

0100376
81R40

26. The bimetallic tool of point 24 wherein said tool is a broach.

27. The bimetallic tool if point 24 wherein said tool is a tap.

28. The bimetallic tool of point 24 wherein said tool is a milling cutter.

29. The bimetallic tool of point 18 or 20 wherein said first structural component is a tungsten alloy.

30. The bimetallic tool of point 18 or 20 wherein said first structural component is carbide.

31. The bimetallic tool of point 18 or 20 wherein said second structural component comprises a metal selected from the group consisting of silver, copper, gold and aluminum.

## Claims

81R40

1.    A metal working tool comprising:

a first substantially planar structure having at least one metal working region for contacting and machining a workpiece;

means for conveying a first and a second portion of a fluid through said first substantially planar structure and wherein said means directs said first portion of said fluid proximate said metal working region; and

means for directing said second portion of said fluid proximate said metal working region.

2.    The metal working tool of Claim 1 wherein said means for directing said second portion of said fluid proximate said metal working region comprises a second structure having at least one internal fluid passage for receiving said second portion of said fluid and for conveying said second portion of said fluid to at least one fluid exit port in said second structure proximate said metal working region.

3.    The metal working tool of Claim 2 wherein said first substantially planar structure comprises a metal cutting insert.

4.    The metal working tool of Claim 2 wherein said second structure comprises a chipbreaker.

5 .    The metal working tool of Claim 2 further including means for directing a third portion of fluid proximate said metal working region.

6. The metal working tool of Claim 5 wherein said means for directing a third portion of fluid comprises a third structure having at least one interior fluid passage in fluid communication with a fluid source and with at least one fluid exit port in said third structure.

7. The metal working tool of Claim 6 wherein said third structure abuts said first substantially planar structure and said interior fluid passage in said third structure is in fluid communication with said fluid supply passage in said first substantially planar structure.

8. The metal working tool of Claim 1 wherein said first substantially planar structure comprises at least a first substantially planar metallic structural component having at least one metal working edge within said metal working region and a second metallic structural component having greater thermal conductivity than said first structural component and in thermal communication therewith.

9. The metal working tool of Claim 8 further including means for causing electrical current to flow between said tool and said workpiece.

10. The metal working tool of Claim 1 wherein said first substantially planar structure is a bimetallic structure comprising a first high strength metallic structural component having at least one metal working region integral with and in thermal communication with a second metallic structural component having greater thermal conductivity than said first component and wherein said first component is interposed between said second component and a workpiece to be machined by said tool.

81R40

11. A bimetallic tool comprising a first high strength metallic structural component having at least one metal working region integral with and in thermal communication with a second metallic structural component having greater thermal conductivity than said first component and wherein said first component is interposed between said second component and a workpiece to be machined by said tool.

0100376

1/4

Fig.1.

Fig.2.

**Fig.2.A.**

**Fig.2.B.**

**Fig.3.**

44 40 68

48

**Fig.2.C.**

46

56

55

50

52

70 14'

46

66

56

55

48

52 50 48 54

4

4

**Fig.4.**

46 70 14'

41 40 70'

**Fig.5.**

68

66

40

46

55

48

52 50

**Fig.7.**

80 74 76 73

72 78

**Fig.6.**